# FASCICULE DE BREVET EUROPEEN

(11) **EP 4 087 068 B1**
(45) Date de publication et mention de la délivrance du brevet: **24.12.2025**
(21) Numéro de dépôt: 22169044.9
(22) Date de dépôt: 20.04.2022
(51) Int. Cl.: B60L 53/16, H01R 13/52

(54) **ASSEMBLAGE DE PROTECTION POUR CONNECTEURS, SYSTEME ET VEHICULE MUNI D'UN TEL ASSEMBLAGE**
SCHUTZBAUGRUPPE FÜR STECKVERBINDER, SYSTEM UND FAHRZEUG MIT EINER SOLCHEN BAUGRUPPE
ASSEMBLY FOR PROTECTING CONNECTORS, SYSTEM AND VEHICLE PROVIDED WITH SUCH AN ASSEMBLY

(30) Priorité: 06.05.2021 FR 2104780
(43) Date de publication de la demande: 09.11.2022
(73) Titulaire: Airbus Helicopters, 13725 Marignane Cedex (FR)
(72) Inventeur: CREMEZI, Alain, 13012 MARSEILLE (FR); JACQUEY, Isabelle, 13430 EYGUIERES (FR); HAUTOT, Gaël, 13880 VELAUX (FR)
(74) Mandataire: GPI Brevets

(56) Documents cités:
- US-A1- 2007 012 474
- US-A1- 2017 069 997
- US-B2- 10 340 628
- US-B2- 7 442 077
- US-B2- 9 653 838
- ANONYMOUS: "Hydraulik Kupplung 12-L Stecker f�r Traktor Lader | 21,93 EUR, 21,93 EUR", 9 May 2019 (2019-05-09), XP093160268, Retrieved from the Internet <URL:https://www.hydrauliktechnik24.de/2-x-Hydraulik-Kupplung-12-L-Stecker-Muffe-Traktor-Lader> [retrieved on 20240507]

## Description

La présente invention concerne un assemblage de protection pour connecteurs, un système de connexion muni des connecteurs et d'un tel assemblage, et un véhicule muni d'un tel assemblage.

Un aéronef peut comprendre divers organes connectés les uns aux autres afin de faire circuler un signal lumineux, un fluide, un signal électrique porteur de données, ou encore une puissance électrique. Par exemple, un équipement peut être connecté à une tresse électrique faisant circuler un courant électrique et/ou à un bus faisant circuler des données. Le terme « équipement » désigne un objet utilisant la puissance électrique, le signal électrique, la lumière ou le fluide reçu. Un tel équipement peut être un calculateur, un écran.... Selon un autre exemple, deux câbles électriques sont connectés l'un à l'autre. Selon un autre exemple, une fibre optique est connectée à une autre fibre optique ou à un équipement ou deux tuyaux sont connectés l'un à l'autre.

Divers systèmes de connexion connus comportent des connecteurs pour connecter deux organes électriquement, optiquement ou fluidiquement.

Un premier système de connexion électrique simple comporte un connecteur à cosse et un connecteur à vis. Un aéronef comporte usuellement des tresses métalliques débouchant sur une cosse de fixation à chaque extrémité. Lors d'opérations de maintenance, il convient de déconnecter les cosses, puis de les reconnecter à l'issue de la maintenance selon une procédure nécessitant une préparation de surface et un contrôle de continuité électrique.

Un deuxième système de connexion dit « rapide » comporte deux connecteurs à connecter l'un à l'autre par une simple manipulation.

En particulier, il est possible d'avoir un connecteur ayant au moins une partie mâle à insérer au moins partiellement au sein d'une cavité d'un connecteur femelle. A titre illustratif, le connecteur mâle peut comprendre une tige métallique à insérer dans un fourreau métallique du connecteur femelle. Les connecteurs d'un système de connexion rapide peuvent être simples ou relativement complexes pour garantir que ces connecteurs soient toujours connectés l'un à l'autre, en particulier dans un environnement subissant des vibrations et notamment au sein d'un aéronef. Par exemple, un tel système de connexion rapide comporte une fixation à baïonnette. Une telle fixation à baïonnette peut comprendre un pion solidaire d'un connecteur et une gorge en L solidaire de l'autre connecteur dans laquelle le pion peut être inséré.

Un système de connexion rapide est donc plus simple d'utilisation que le premier système de connexion. Cependant, lorsque les connecteurs d'un système de connexion rapide ne sont pas connectés l'un à l'autre, ces connecteurs ne sont pas protégés de l'environnement extérieur. Des particules de poussière ou autres peuvent alors s'introduire dans les connecteurs. Ces particules peuvent ainsi nuire à la transmission ultérieure de données ou de puissances électriques voire à la circulation d'une lumière ou d'un fluide. En outre, un défaut provoqué par une particule peut être délicat à détecter lorsque visuellement les connecteurs sont correctement assemblés.

Or, les organes munis de systèmes de connexion rapide sont susceptibles d'être déconnectés. En particulier, des organes optionnels peuvent être munis de ce type de systèmes de connexion rapide afin d'être stockés lorsqu'ils ne sont pas utilisés. A titre d'exemple, une caméra peut être agencée sur un hélicoptère seulement lors de missions particulières. Ces organes peuvent notamment être stockés dans des lieux possiblement remplis de particules polluantes.

Pour protéger un connecteur, un capuchon anti-poussière peut être disposé sur le connecteur déconnecté. Toutefois, il convient que le capuchon puisse être rapidement retiré afin de permettre une utilisation immédiate lorsqu'un connecteur est déconnecté.

Le document US 10,340,628 B2 décrit un capuchon relié par une longe à un connecteur.

Bien qu'intéressant, un capuchon peut aussi recueillir des particules polluantes lorsque ce capuchon n'est pas disposé sur le connecteur. Lorsque le capuchon est ensuite agencé sur le connecteur pour le protéger, ce capuchon peut alors transmettre des particules au connecteur. Un opérateur doit donc veiller à nettoyer le capuchon avant de l'agencer sur un connecteur.

Le document US 9,653,838 décrit un système de connexion muni de deux connecteurs portant chacun un capuchon et un crochet. Lorsque les connecteurs sont connectés l'un à l'autre, les capuchons sont mis en vis-à-vis.

Le document US 2017/069997 décrit un assemblage comprenant une fiche et une prise. La prise comporte un boîtier délimitant une ouverture de connexion. De plus, la prise comporte un couvercle articulé au boîtier pour fermer l'ouverture de connexion en l'absence de la fiche. En outre, le couvercle repose sur un support de la fiche lorsque cette fiche est insérée dans la prise.

Le document US 2007/012474 présente un capuchon relié à un connecteur à baïonnette.

Le document US 7 442 077 décrit un câble muni d'un connecteur mâle relié à un bouchon correspondant et d'un connecteur femelle relié à un bouchon femelle correspondant.

Ce système est intéressant mais relativement complexe.

La présente invention a alors pour objet de proposer un assemblage alternatif relativement simple pour protéger un connecteur sans le polluer.

Selon l'invention, un assemblage de protection comporte un premier capuchon évidé muni d'une première cavité configurée pour loger un premier connecteur, ledit assemblage de protection étant muni d'un deuxième capuchon, le deuxième capuchon comprenant une portion évidée délimitant une deuxième cavité configurée pour loger un deuxième connecteur à connecter au premier connecteur.

La première cavité est conformée à une enveloppe extérieure de la portion évidée, ledit deuxième capuchon pénétrant, dans un mode connecté et de manière étanche, dans la première cavité en isolant la première cavité et la deuxième cavité d'un milieu extérieur.

L'expression « la première cavité est conformée à une enveloppe extérieure de la portion évidée » signifie que la portion évidée en tant que telle peut être introduite dans la première cavité, la première cavité et la deuxième cavité étant isolées du milieu extérieur par interférence de formes et/ou par un joint.

Cet assemblage peut protéger divers types de connecteurs et notamment des connecteurs de systèmes de connexion rapide agencés aussi bien sur des équipements que des tresses métalliques, des fibres optiques ou autres. Cet assemblage peut notamment protéger un système muni d'un premier connecteur contenu dans un volume pouvant contenir le deuxième connecteur.

Par exemple, les connecteurs sont du type décrit dans le document FR 3 080 684.

Les connecteurs peuvent être disposés sur un lien fonctionnel, à savoir sur un lien échangeant avec le connecteur associé un signal optique ou électrique ou un fluide. Toutefois, un des connecteurs peut être une base de repos à laquelle est connecté l'autre connecteur lors d'un stockage par exemple.

Indépendamment de la nature des connecteurs, l'assemblage comporte un premier capuchon délimitant une première cavité conformée notamment à un premier connecteur. Le premier capuchon peut ainsi être enfilé, sur le premier connecteur pour le protéger. De même, l'assemblage comporte un deuxième capuchon pouvant être enfilé sur un deuxième connecteur.

En outre, le premier capuchon et le deuxième capuchon sont dimensionnés pour être insérés l'un dans l'autre de manière à isoler, à l'air et/ou à l'eau, l'intérieur des capuchons d'un milieu extérieur. Le deuxième capuchon en tant que tel peut être inséré dans le premier capuchon avec un ajustement serré de manière à empêcher l'entrée de particules étrangères dans le premier capuchon et le deuxième capuchon.

Le premier capuchon et le deuxième capuchon se protègent ainsi réciproquement dans le mode connecté. Le premier capuchon empêche des particules d'entrer dans la deuxième cavité du deuxième capuchon, et le deuxième capuchon empêche des particules d'entrer dans la première cavité du premier capuchon.

En présence d'un connecteur à connexion rapide connecté à une tresse métallique, le capuchon correspondant protège les contacts du connecteur durant un mode déconnecté.

Sur un aéronef, le premier capuchon et le deuxième capuchon se protègent l'un et l'autre lors des vols et protègent les connecteurs lors du stockage des connecteurs et des liens éventuels associés. Les capuchons ne sont donc pas pollués lorsque le premier connecteur est connecté au deuxième connecteur. Les capuchons peuvent être agencés sur le premier connecteur et le deuxième connecteur dans un mode déconnecté, sans nécessiter des opérations lourdes de nettoyage. Les risques de détérioration d'une liaison fluidique, électrique ou optique par pollution sont donc réduits.

Un tel emboîtement d'un capuchon dans l'autre n'a rien d'évident. Toutefois, le premier connecteur peut être un connecteur femelle accueillant un deuxième connecteur mâle. De fait, au moins dans ce cas, le premier connecteur peut avoir des dimensions extérieures supérieures aux dimensions extérieures du deuxième capuchon. Par voie de conséquence, le premier capuchon peut définir une première cavité apte à accueillir le deuxième capuchon.

A titre illustratif, le premier connecteur et le deuxième connecteur ont respectivement une forme sensiblement cylindrique ayant un grand rayon et une forme sensiblement cylindrique ayant un plus petit rayon. Il peut en aller de même du premier capuchon et du deuxième capuchon.

Selon l'invention, le premier capuchon et le deuxième capuchon peuvent donc s'emboîter parfaitement l'un dans l'autre pour ne récupérer aucune saleté ni poussière quand ils ne sont pas ou plus utilisés afin de protéger le premier connecteur et le deuxième connecteur.

En outre, le premier capuchon et le deuxième capuchon ayant des formes complémentaires pour s'emboîter l'un dans l'autre, les opérations de connexion peuvent être sécurisées. Si un capuchon protégeant un connecteur ne s'emboîte pas dans l'autre capuchon, alors au moins un des connecteurs n'est pas le connecteur à utiliser. Par exemple, un opérateur peut essayer de relier une tresse métallique à la mauvaise tresse métallique, le capuchon d'une tresse métallique ne s'adaptant pas sur le capuchon de l'autre tresse métallique.

L'assemblage de protection peut comporter une ou plusieurs des caractéristiques qui suivent, prises seules ou en combinaison.

Selon une possibilité, dans le mode connecté, le deuxième capuchon est emboîté dans le premier capuchon tête-bêche.

Le premier capuchon et le deuxième capuchon se protègent donc l'un et l'autre.

Selon une possibilité compatible avec la précédente, le premier capuchon peut comprendre une partie évidée ayant une première extrémité proximale ouverte et une première extrémité distale obturée par un premier fond, la portion évidée ayant une deuxième extrémité proximale ouverte et une deuxième extrémité distale obturée par un deuxième fond, ladite portion évidée étant insérée dans la partie évidée par sa deuxième extrémité proximale dans le mode connecté.

Dès lors, le premier fond et le deuxième fond sont en face l'un de l'autre dans le mode connecté. De plus, la première cavité et la deuxième cavité sont isolées d'un milieu extérieur.

Selon une possibilité compatible avec les précédentes, ledit premier capuchon peut être solidaire d'une première attache configurée pour être attachée au premier connecteur ou à un premier lien solidaire du premier connecteur, le deuxième capuchon étant solidaire d'une deuxième attache configurée pour être attachée au deuxième connecteur ou à un deuxième lien solidaire du deuxième connecteur.

Le premier capuchon et le deuxième capuchon sont ainsi imperdables en étant attachés respectivement au premier connecteur ou au premier lien et au deuxième connecteur ou au deuxième lien. Le premier capuchon et le deuxième capuchon sont reliés directement ou indirectement par le lien correspondant au premier connecteur et au deuxième connecteur qu'ils protègent.

Un opérateur ne risque pas de se tromper de capuchons puisque les capuchons sont reliés à l'élément à protéger. En outre, comme indiqué précédemment, les capuchons peuvent sécuriser la connexion des connecteurs associés.

Le cas échéant, les capuchons d'un aéronef ne sont pas libres en vol, les capuchons étant attachés.

La première attache et/ou la deuxième attache peuvent comprendre chacun une chainette, une cordelette, un fil synthétique, un ruban déformable élastiquement...

La première attache et/ou la deuxième attache peuvent comprendre chacune un système d'accroche fixe ou mobile pour être attaché au connecteur ou au lien associé. Par exemple, un tel système d'accroche peut comprendre un anneau, une pièce sertie ou moulée ...

Selon une possibilité compatible avec les précédentes, le premier capuchon et le deuxième capuchon, voire la première attache et la deuxième attache peuvent être réalisés dans une matière choisie pour ne pas engendrer des particules polluantes.

Selon une possibilité compatible avec les précédentes, le premier capuchon et le deuxième capuchon, voire la première attache et la deuxième attache peuvent comporter une matière à mémoire de forme.

Cette matière peut tendre à retourner dans une forme spécifique soit dans le mode connecté soit dans un mode déconnecté dans lequel le premier capuchon recouvre le premier connecteur et le deuxième capuchon recouvre le deuxième connecteur.

Selon un exemple, le deuxième capuchon peut être comprimé latéralement pour être inséré dans le premier capuchon dans le mode connecté, et retourne dans sa forme originelle dans le mode déconnecté.

Par exemple, le premier capuchon et le deuxième capuchon, voire la première attache et la deuxième attache peuvent comporter une matière du groupe des caoutchoucs et des élastomères. L'utilisation de ces dits groupes de matière permet, en cas d'usure, de les changer plus facilement.

Selon une possibilité compatible avec les précédentes, le deuxième capuchon peut comporter une marque de positionnement.

Une telle marque de positionnement vise à identifier si le deuxième capuchon est correctement inséré dans le premier capuchon dans le mode connecté.

Une telle marque de positionnement peut comprendre un signe coloré à savoir un signe ayant une couleur distincte d'une couleur du deuxième capuchon voire du premier capuchon. Un tel signe coloré peut comprendre au moins un trait, au moins un point...

L'utilisation de connecteurs munis d'un système de verrouillage et d'un capuchon ayant une marque de positionnement assurant l'emboitement correct du deuxième capuchon dans le premier capuchon permet d'obtenir un système robuste pouvant être « avionable ».

Par exemple, la marque de positionnement est masquée dans la première cavité dans le mode connecté.

Par exemple, ladite marque de positionnement est située en dehors de la deuxième cavité. Eventuellement, l'enveloppe 420 de la portion évidée du deuxième capuchon comporte cette marque de positionnement.

Selon une possibilité compatible avec les précédentes, le premier capuchon peut comporter une première forme au regard de la première cavité et ladite portion évidée comporte une deuxième forme en dehors de la deuxième cavité, la deuxième forme étant conformée à la première forme pour maintenir le deuxième capuchon dans le premier capuchon dans le mode connecté.

La première forme et la deuxième forme peuvent former des moyens de solidarisation encliquetables pour éviter une séparation intempestive du premier capuchon et du deuxième capuchon dans le mode connecté.

Par exemple, la première forme comporte une rainure et la deuxième forme comporte une protubérance de forme complémentaire à la rainure, ou inversement. Par exemple, la rainure n'est pas parallèle à un axe selon lequel le deuxième capuchon est inséré dans le premier capuchon. Dans le mode connecté, la protubérance pénètre dans la rainure pour maintenir le premier capuchon et le deuxième capuchon emboités l'un dans l'autre.

Par ailleurs, un système de connexion peut être muni d'un premier connecteur et d'un deuxième connecteur ainsi que d'un assemblage de protection selon l'invention.

Selon une possibilité, le premier capuchon peut être attaché au premier connecteur ou à un premier lien solidaire du premier connecteur, ledit deuxième capuchon étant attaché au deuxième connecteur ou à un deuxième lien solidaire du deuxième connecteur.

Selon une possibilité compatible avec la précédente, le premier connecteur peut être en liaison fluidique, électrique ou optique avec un premier lien.

Selon une possibilité compatible avec les précédentes, le deuxième connecteur peut être en liaison fluidique, électrique ou optique avec un deuxième lien ou est une base de repos.

Selon une possibilité compatible avec les précédentes, ledit premier connecteur et le deuxième connecteur peuvent être connectés l'un à l'autre dans un mode connecté, ledit premier connecteur étant emmanché dans le premier capuchon et ledit deuxième connecteur étant emmanché dans le deuxième capuchon dans un mode déconnecté.

Selon une possibilité compatible avec les précédentes, ledit premier connecteur et le deuxième connecteur peuvent comporter un système de verrouillage.

Par exemple, un tel système de verrouillage peut comprendre des pas de vis complémentaires et/ou un système à baïonnette.

Selon un autre exemple de réalisation, un véhicule peut comporter un assemblage de protection selon l'invention, voire un système de connexion selon l'invention.

L'invention et ses avantages apparaîtront avec plus de détails dans le cadre de la description qui suit avec des exemples donnés à titre illustratif en référence aux figures annexées qui représentent :
la figure 1, un schéma illustrant un système de connexion selon l'invention dans le mode connecté, agencé par exemple au sein d'un véhicule,
la figure 2, une vue en trois dimensions d'un premier capuchon dans le mode déconnecté,
la figure 3, une coupe de la figure 2,
la figure 4, une vue en trois dimensions d'un deuxième capuchon dans le mode déconnecté,
la figure 5, une coupe de la figure 4,
la figure 6, une coupe présentant le premier capuchon et le deuxième capuchon de la figure 1 dans le mode connecté,
la figure 7, un schéma présentant un autre exemple de premier capuchon, de deuxième capuchon ainsi que de premier et deuxième connecteurs,
la figure 8, une coupe présentant le premier capuchon et le deuxième capuchon de la figure 7 dans le mode connecté, et
la figure 9, un schéma présentant un autre exemple de premier capuchon, de deuxième capuchon ainsi que de premier et deuxième connecteurs.

Les éléments présents dans plusieurs figures distinctes sont affectés d'une seule et même référence.

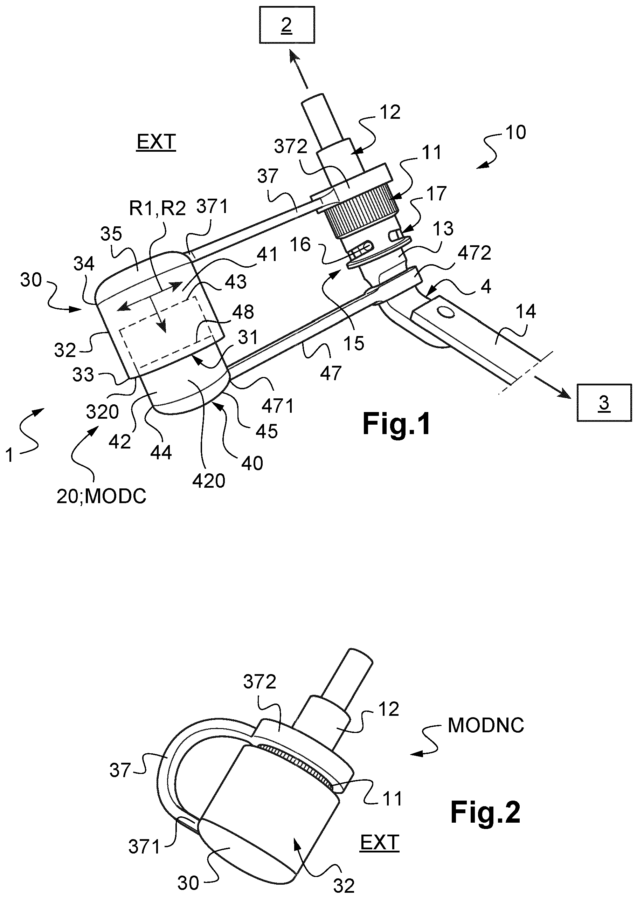

La figure 1 présente un exemple d'assemblage 20 de protection selon l'invention. Cet assemblage 20 peut être agencé au sein d'un système de connexion 10, voire au sein d'un véhicule 1. Un tel véhicule 1 peut être un aéronef, un véhicule terrestre, maritime...

Un tel assemblage 20 peut plus généralement être utilisé dans dives systèmes munis d'un système de connexion 10.

Quelle que soit la réalisation, un système de connexion 10 comporte un premier connecteur 11 lié à un premier lien 12. Le premier lien 12 peut déboucher sur un organe 2. Le premier connecteur 11 peut, par exemple, comprendre au moins un conducteur électrique relié électriquement à un conducteur électrique du premier lien 12 pour faire circuler une puissance électrique ou des données, au moins un conducteur de lumière relié à une fibre optique du premier lien 12, au moins un orifice traversé par une fibre optique du premier lien 12, ou encore au moins un conduit lié à un tuyau du premier lien 12 pour faire circuler un fluide.

De plus, le système de connexion 10 comporte un deuxième connecteur 13.

Le deuxième connecteur 13 peut simplement être configuré pour être fixé au premier connecteur 11. Dans ce cas, le deuxième connecteur 13 peut être une base de repos 4 et peut ne pas communiquer fluidiquement, optiquement ou électriquement avec le premier connecteur 11.

Alternativement, le deuxième connecteur 13 peut être lié à un deuxième lien 14. Le deuxième lien 14 peut déboucher sur un autre connecteur connecté à un organe 3. Le deuxième connecteur 13 peut, par exemple, comprendre au moins un conducteur électrique relié électriquement à un conducteur électrique du deuxième lien 14 et à un conducteur électrique du premier connecteur 11 dans un mode connecté MODC pour faire circuler une puissance électrique ou des données, au moins un conducteur de lumière relié à une fibre optique du deuxième lien 14 et à un conducteur de lumière du premier connecteur 11 dans un mode connecté MODC, au moins un orifice traversé par une fibre optique du deuxième lien 14, au moins un conduit lié à un tuyau du premier lien 12 et à un conduit du premier connecteur 11 dans un mode connecté MODC pour faire circuler un fluide.

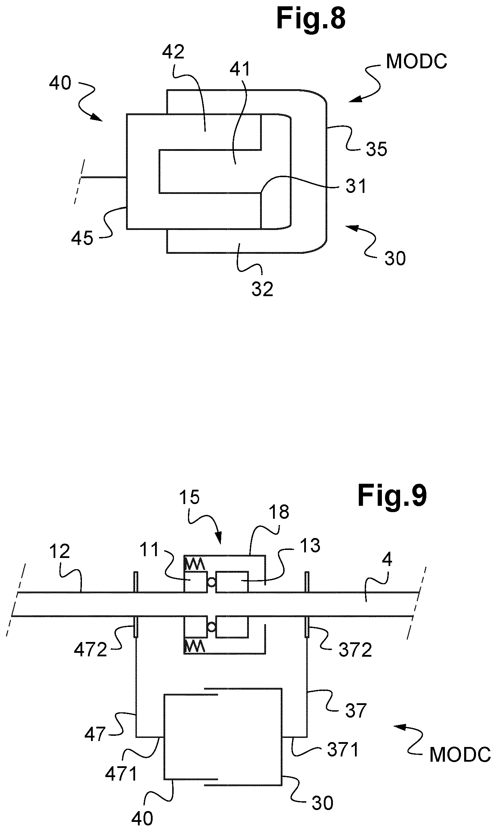

Par exemple, la figure 1 illustre des connecteurs électriques alors que la figure 9 illustre des connecteurs fluidiques ou optiques.

Par ailleurs, le premier connecteur 11 peut être un connecteur femelle et le deuxième connecteur 13 peut être un connecteur mâle configuré pour pénétrer dans le connecteur femelle, ou inversement.

Indépendamment de la nature du premier connecteur 11 et du deuxième connecteur 13, le premier connecteur 11 et le deuxième connecteur 13 peuvent comporter un système de verrouillage 15.

Selon l'exemple de la figure 1, un système de verrouillage 15 peut comprendre un pion 16 d'un connecteur et une douille de l'autre connecteur munie d'une gorge 17 en L. Le pion 16 et la douille sont mobiles en rotation l'un par rapport à l'autre. Le pion 16 est alors enfoncé dans une branche de la gorge 17 puis un mouvement de rotation permet de bloquer le pion 16 dans l'autre branche de la gorge 17. De fait, le connecteur muni de la douille est par exemple un connecteur mâle et le connecteur muni du pion 16 est un connecteur femelle.

Selon l'exemple de la figure 9, le système de verrouillage 15 peut comprendre une douille filetée 18 d'un connecteur, la douille filetée 18 pouvant être vissée à un taraudage de l'autre connecteur. De fait, le connecteur muni de la douille est un connecteur mâle, l'autre connecteur étant un connecteur femelle.

Ces exemples sont donnés à titre illustratif.

Indépendamment de la nature du premier connecteur 11 ainsi que celle du deuxième connecteur 13 et d'un éventuel système de verrouillage 15, les figures illustrent diverses variantes d'un assemblage 20 de protection selon l'invention.

Quelle que soit la variante et en référence à la figure 1, un assemblage 20 de protection selon l'invention comporte un premier capuchon 30 évidé délimitant une première cavité 31 configurée pour loger un premier connecteur 11.

Par exemple, le premier capuchon 30 comprend une partie 32 évidée qui s'étend d'une première extrémité proximale 33 jusqu'à une première extrémité distale 34. La première extrémité proximale 33 est ouverte sur un milieu extérieur EXT alors que la première extrémité distale 34 est obturée par un premier fond 35. Dès lors, la première cavité 31 est borgne dans le sens où elle débouche sur le milieu extérieur EXT uniquement au niveau de la première extrémité proximale 33. La partie 32 évidée comporte une paroi interne 320 délimitant localement la première cavité 31. Par exemple, la paroi interne 320 est de forme sensiblement cylindrique de révolution et présente un premier rayon R1.

Par ailleurs, le premier capuchon 30 peut être solidaire d'une première attache 37. La première attache 37 s'étend d'une première zone 371 jusqu'à une deuxième zone 372. La première zone 371 est fixée par des méthodes usuelles au premier capuchon 30, et par exemple au premier fond 35. La deuxième zone 372 est attachée au premier connecteur 11 ou au premier lien 12. Par exemple, la deuxième zone 372 comporte un anneau disposé autour du premier connecteur 11 ou du premier lien 12.

Eventuellement, le premier capuchon 30 est réalisé à partir d'un matériau à mémoire de forme.

Eventuellement, le premier capuchon 30 et la première attache 37 forment une pièce monolithique.

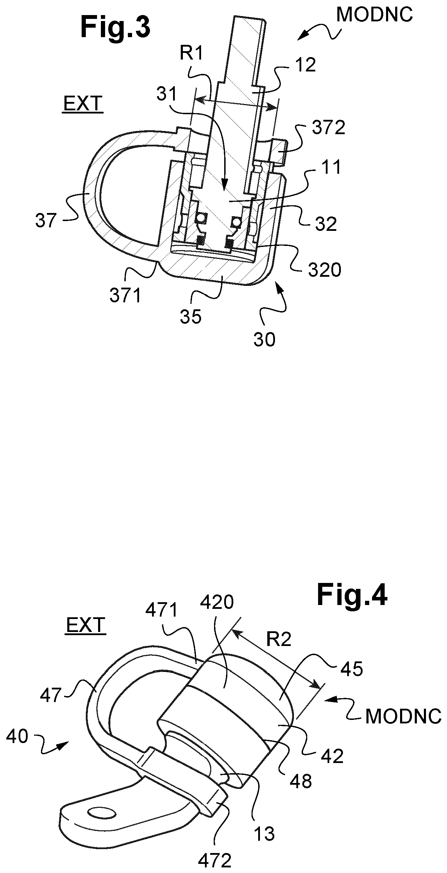

Dès lors et en référence aux figures 2 et 3, dans un mode déconnecté MODNC le partie 32 évidée peut être enfilée sur le premier connecteur 11 pour le protéger de particules présentes dans le milieu extérieur EXT. Le premier capuchon 30 empêche alors, lorsque le premier connecteur 11 est inopérant, la pénétration des particules étrangères, par exemple des cailloux, des particules de poussière, de l'eau ou autres, dans les éléments du premier connecteur 11 aptes à faire circuler un courant électrique, un fluide ou de la lumière.

En référence à la figure 1, l'assemblage de protection 20 comporte un deuxième capuchon 40 évidé délimitant une deuxième cavité 41 configurée pour loger le deuxième connecteur 13.

Par exemple, le deuxième capuchon 40 comprend une portion 42 évidée qui s'étend d'une deuxième extrémité proximale 43 jusqu'à une deuxième extrémité distale 44. La deuxième extrémité proximale 43 est ouverte sur le milieu extérieur EXT alors que la deuxième extrémité distale 44 est obturée par un deuxième fond 45. Dès lors, la deuxième cavité 41 est borgne dans le sens où elle ne débouche sur le milieu extérieur EXT uniquement au niveau de la deuxième extrémité proximale 43. Par exemple, la portion 42 évidée comporte une enveloppe interne délimitant la deuxième cavité 41 et une enveloppe 420 extérieure en regard du milieu extérieur EXT dans le mode déconnecté. Par exemple ; l'enveloppe extérieure 420 est de forme sensiblement cylindrique de révolution et présentant un deuxième rayon R2. Le deuxième rayon R2 est éventuellement sensiblement égal au premier rayon R1.

Par ailleurs, le deuxième capuchon 40 peut être solidaire d'une deuxième attache 47. La deuxième attache 47 s'étend d'un premier tronçon 471 jusqu'à un deuxième tronçon 472. Le premier tronçon 471 est fixé par des méthodes usuelles au deuxième capuchon 40, et par exemple au deuxième fond 45. Le deuxième tronçon 472 est attaché au deuxième connecteur 13 ou au deuxième lien 14. Par exemple, le deuxième tronçon 472 comporte un anneau disposé autour du deuxième connecteur 13 ou du deuxième lien 14.

Eventuellement, le deuxième capuchon 40 est réalisé à partir d'un matériau à mémoire de forme.

Eventuellement, le deuxième capuchon 40 et la deuxième attache 47 forment une pièce monolithique.

Comme illustré sur la figure 4, le deuxième capuchon 40 peut comporter une marque de positionnement 48 en dehors de la deuxième cavité 41. Par exemple, l'enveloppe 420 extérieure de la portion 42 comporte cette marque de positionnement.

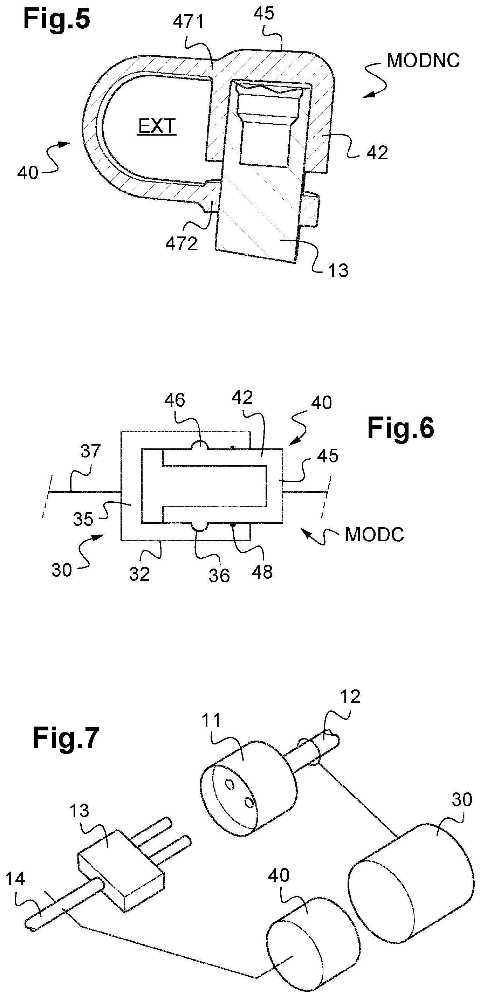

Dès lors et en référence aux figures 4 et 5, dans le mode déconnecté MODNC la portion 42 évidée peut être enfilée sur le deuxième connecteur 13 pour le protéger de particules présentes dans le milieu extérieur EXT.

Le deuxième capuchon 40 empêche alors, lorsque le deuxième connecteur 13 est inopérant, la pénétration des particules étrangères, par exemple des cailloux, des particules de poussière, de l'eau ou autres, le cas échéant dans les éléments du deuxième connecteur 13 apte à faire circuler un courant électrique, un fluide ou de la lumière.

En référence à la figure 1, l'enveloppe 420 extérieure de la portion évidée du deuxième capuchon a une forme complémentaire à la forme de la première cavité 31 et de la paroi interne 320 de la partie 32 évidée.

Dans le mode connecté MODC illustré sur la figure 1, le premier connecteur 11 est relié/connecté au deuxième connecteur 13. De plus, le deuxième capuchon 40, et en particulier sa portion 42 évidée, pénètre de manière étanche dans la première cavité 31. Le deuxième capuchon 40 est emboîté dans le premier capuchon 30 tête-bêche.

Plus précisément, l'enveloppe 420 extérieure de la portion 42 évidée est insérée dans la partie 32 évidée par sa deuxième extrémité proximale 43.

Par suite, le deuxième capuchon 40 est agencé dans le premier capuchon 30 avec un ajustement serré de manière à empêcher l'entrée de particules étrangères dans le premier capuchon 30 et le deuxième capuchon 40.

Eventuellement, la paroi interne 320 de la partie 32 évidée comporte un joint et/ou l'enveloppe 420 extérieure de la portion 42 évidée comporte un joint pour favoriser l'étanchéité entre le premier capuchon 30 et le deuxième capuchon 40 dans le mode connecté.

Le cas échéant, le deuxième capuchon 40 est inséré dans le premier capuchon 30 jusqu'à ce que la marque de positionnement 48 ne soit plus visible.

En référence à la figure 6, le premier capuchon 30 peut comporter une première forme 36 au niveau de sa paroi interne 320 au regard de la première cavité 31. De même, la portion 42 évidée peut comporter une deuxième forme 46 au niveau de son enveloppe 420 extérieure en dehors de la deuxième cavité 41. La deuxième forme 46 peut être complémentaire à la première forme 36 pour maintenir le deuxième capuchon 40 dans le premier capuchon 30 dans le mode connecté MODC. Selon exemple illustré, la première forme 36 comporte une gorge annulaire et la deuxième forme 46 comporte une protubérance annulaire complémentaire. La première forme 36 et la deuxième forme 46 peuvent alors coopérer l'une avec l'autre et former des moyens de solidarisation encliquetables et réversibles. L'inverse est aussi possible.

Les figures 1 à 6 présentent un exemple d'assemblage pouvant être adapté à un système de connexion électrique par exemple.

Les figures 7 et 8 illustrent un assemblage pouvant être adapté pour un système ayant un premier connecteur 11 cylindrique de type prise électrique femelle et un deuxième connecteur 13 plat de type prise électrique male. La deuxième cavité 41 est alors adaptée à la forme de ce deuxième connecteur 13.

La figure 9 illustre un système de connexion fluidique ou optique par exemple.

L'assemblage selon l'invention peut donc être adapté à divers types de connecteurs.

## Revendications

1. Assemblage de protection (20) muni d'un premier capuchon (30) évidé muni d'une première cavité (31) configurée pour loger un premier connecteur (11), ledit assemblage de protection (20) étant muni d'un deuxième capuchon (40), le deuxième capuchon (40) comprenant une portion (42) évidée délimitant une deuxième cavité (41) configurée pour loger un deuxième connecteur (13) à connecter au premier connecteur (11),
**caractérisé en ce que** ladite première cavité (31) est conformée à une enveloppe extérieure (420) de ladite portion (42) évidée, ledit deuxième capuchon (40) pénétrant, dans un mode connecté (MODC) et de manière étanche, dans la première cavité (31) en isolant la première cavité (31) et la deuxième cavité (41) d'un milieu extérieur (EXT).

2. Assemblage de protection selon la revendication 1,
**caractérisé en ce que** dans le mode connecté (MODC), le deuxième capuchon (40) est emboité dans le premier capuchon (30) tête-bêche

3. Assemblage de protection selon l'une quelconque des revendications 1 à 2,
**caractérisé en ce que** ledit premier capuchon (30) comprend une partie (32) évidée ayant une première extrémité proximale (33) ouverte et une première extrémité distale (34) obturée par un premier fond (35), la portion (42) évidée ayant une deuxième extrémité proximale (43) ouverte et une deuxième extrémité distale (44) obturée par un deuxième fond (45), ladite portion (42) évidée étant insérée dans la partie (32) évidée par sa deuxième extrémité proximale (43) dans le mode connecté (MODC).

4. Assemblage de protection selon l'une quelconque des revendications 1 à 3,
**caractérisé en ce que** ledit premier capuchon (30) est solidaire d'une première attache (37) configurée pour être attachée au premier connecteur (11) ou à un premier lien (12) solidaire du premier connecteur (11), le deuxième capuchon (40) étant solidaire d'une deuxième attache (47) configurée pour être attachée au deuxième connecteur (13) ou à un deuxième lien (14) solidaire du deuxième connecteur (13).

5. Assemblage de protection selon l'une quelconque des revendications 1 à 4,
**caractérisé en ce que** ledit premier capuchon (30) et ledit deuxième capuchon (40) comportent une matière à mémoire de forme.

6. Assemblage de protection selon l'une quelconque des revendications 1 à 5,
**caractérisé en ce que** ledit deuxième capuchon (40) comporte une marque de positionnement (48).

7. Assemblage de protection selon la revendication 6,
**caractérisé en ce que** ladite marque de positionnement (48) est masquée dans la première cavité (31) dans le mode connecté (MODC).

8. Assemblage de protection selon l'une quelconque des revendications 6 à 7,
**caractérisé en ce que** ladite marque de positionnement (48) comporte un signe coloré.

9. Assemblage de protection selon l'une quelconque des revendications 6 à 8,
**caractérisé en ce que** ladite marque de positionnement (48) est située en dehors de la deuxième cavité.

10. Assemblage de protection selon l'une quelconque des revendications 1 à 9,
**caractérisé en ce que** le premier capuchon (30) comporte une première forme (36) au regard de la première cavité (31) et ladite portion (42) évidée comporte une deuxième forme (46) en dehors de la deuxième cavité (41), la deuxième forme (46) étant conformée à la première forme (36) pour maintenir le deuxième capuchon (40) dans le premier capuchon (30) dans le mode connecté (MODC).

11. Système de connexion (10) muni d'un premier connecteur (11) et d'un deuxième connecteur (13),
**caractérisé en ce que** ledit système de connexion (10) comporte un assemblage de protection (20) selon l'une quelconque des revendications à 1 à 10.

12. Système de connexion selon la revendication 11,
**caractérisé en ce que** ledit premier capuchon (30) est attaché au premier connecteur (11) ou à un premier lien (12) solidaire du premier connecteur (11), ledit deuxième capuchon (40) étant attaché au deuxième connecteur (13) ou à un deuxième lien (14) solidaire du deuxième connecteur (13).

13. Système de connexion selon l'une quelconque des revendications 11 à 12,
**caractérisé en ce que** ledit premier connecteur (11) est en liaison fluidique, ou électrique ou optique avec un premier lien (12).

14. Système de connexion selon l'une quelconque des revendications 11 à 13,
**caractérisé en ce que** ledit deuxième connecteur (13) est en liaison fluidique, ou électrique ou optique avec un deuxième lien (14) ou est une base de repos (4).

15. Système de connexion selon l'une quelconque des revendications 11 à 14,
**caractérisé en ce que** ledit premier connecteur (11) et le deuxième connecteur (13) sont connectés dans un mode connecté (MODC), ledit premier connecteur (11) étant emmanché dans le premier capuchon (30) et ledit deuxième connecteur (13) étant emmanché dans le deuxième capuchon (40) dans un mode déconnecté (MODNC).

16. Système de connexion selon l'une quelconque des revendications 11 à 15,
**caractérisé en ce que** ledit premier connecteur (11) et le deuxième connecteur (13) comportent un système de verrouillage (15).

17. véhicule (1),
**caractérisé en ce que** le véhicule (1) comporte un assemblage de protection (20) selon l'une quelconque des revendications à 1 à 10.

## Patentansprüche

1. Schutzvorrichtung (20) mit einer ersten hohlen Kappe (30), die eine erste Aussparung (31) aufweist, die zur Aufnahme eines ersten Steckverbinders (11) ausgebildet ist, wobei die Schutzvorrichtung (20) eine zweite Kappe (40) umfasst, wobei die zweite Kappe (40) einen hohlen Abschnitt (42) umfasst, der eine zweite Aussparung (41) begrenzt, die zur Aufnahme eines mit dem ersten Steckverbinder (11) zu verbindenden zweiten Steckverbinders (13) ausgebildet ist,
**dadurch gekennzeichnet, dass** die erste Aussparung (31) an eine Außenhülle (420) des hohlen Abschnitts (42) angepasst ist, dass die zweite Kappe (40) in einem verbundenen Modus (MODC) und auf dichte Weise in die erste Aussparung (31) eindringt und die erste Aussparung (31) und die zweite Aussparung (41) von einer Außenumgebung (EXT) isoliert.

2. Schutzvorrichtung nach Anspruch 1,
**dadurch gekennzeichnet, dass** in dem verbundenen Modus (MODC) die zweite Kappe (40) kopfüber in die erste Kappe (30) eingesteckt ist.

3. Schutzvorrichtung nach einem der Ansprüche 1 bis 2,
**dadurch gekennzeichnet, dass** die erste Kappe (30) einen hohlen Abschnitt (32) mit einem offenen ersten proximalen Ende (33) und einem durch einen ersten Boden (35) verschlossenen ersten distalen Ende (34) aufweist, wobei der hohle Abschnitt (42) ein zweites offenes proximales Ende (43) und ein durch einen zweiten Boden (45) verschlossenes zweites distales Ende (44) aufweist, wobei der hohle Abschnitt (42) im verbundenen Modus (MODC) mit seinem zweiten proximalen Ende (43) in den hohlen Abschnitt (32) eingeführt ist.

4. Schutzvorrichtung nach einem der Ansprüche 1 bis 3,
**dadurch gekennzeichnet, dass** die erste Kappe (30) fest mit einer ersten Halterung (37) verbunden ist, die konfiguriert ist, um am ersten Steckverbinder (11) oder an einem ersten Verbindungsglied (12) befestigt zu werden, das fest mit dem ersten Steckverbinder (11) verbunden ist, wobei die zweite Kappe (40) fest mit einer zweiten Halterung (47) verbunden ist, die konfiguriert ist, um am zweiten Steckverbinder (13) oder an einem zweiten Verbindungsglied (14) befestigt zu werden, das fest mit dem zweiten Steckverbinder (13) verbunden ist.

5. Schutzvorrichtung nach einem der Ansprüche 1 bis 4,
**dadurch gekennzeichnet, dass** die erste Kappe (30) und die zweite Kappe (40) ein Formgedächtnismaterial aufweisen.

6. Schutzvorrichtung nach einem der Ansprüche 1 bis 5,
**dadurch gekennzeichnet, dass** die zweite Kappe (40) eine Positionierungsmarkierung (48) aufweist.

7. Schutzvorrichtung nach Anspruch 6,
**dadurch gekennzeichnet, dass** im verbundenen Modus (MODC) die Positionierungsmarkierung (48) in der ersten Aussparung (31) verborgen ist.

8. Schutzvorrichtung nach einem der Ansprüche 6 bis 7,
**dadurch gekennzeichnet, dass** die Positionierungsmarkierung (48) ein farbiges Zeichen umfasst.

9. Schutzvorrichtung nach einem der Ansprüche 6 bis 8,
**dadurch gekennzeichnet, dass** sich die Positionierungsmarkierung (48) außerhalb der zweiten Aussparung befindet.

10. Schutzvorrichtung nach einem der Ansprüche 1 bis 9,
**dadurch gekennzeichnet, dass** die erste Kappe (30) eine dem ersten Hohlraum (31) zugewandte erste Form (36) aufweist und der hohle Abschnitt (42) eine zweite Form (46) außerhalb des zweiten Hohlraums (41) aufweist, wobei die zweite Form (46) an die erste Form (36) angepasst ist, um im verbundenen Modus (MODC) die zweite Kappe (40) in der ersten Kappe (30) zu halten.

11. Steckverbindungssystem (10) mit einem ersten Steckverbinder (11) und einem zweiten Steckverbinder (13),
**dadurch gekennzeichnet, dass** das Steckverbindungssystem (10) eine Schutzvorrichtung (20) gemäß einem der Ansprüche 1 bis 10 umfasst.

12. Steckverbindungssystem nach Anspruch 11,
**dadurch gekennzeichnet, dass** die erste Kappe (30) am ersten Steckverbinder (11) oder an einem ersten Verbindungsglied (12) befestigt ist, das mit dem ersten Steckverbinder (11) fest verbunden ist, und dass die zweite Kappe (40) am zweiten Steckverbinder (13) oder an einem zweiten Verbindungsglied (14) befestigt ist, das mit dem zweiten Steckverbinder (13) fest verbunden ist.

13. Steckverbindungssystem nach einem der Ansprüche 11 bis 12,
**dadurch gekennzeichnet, dass** der erste Verbinder (11) mit einem ersten Verbindungsglied (12) in fluidischer, elektrischer oder optischer Verbindung steht.

14. Steckverbindungssystem nach einem der Ansprüche 11 bis 13,
**dadurch gekennzeichnet, dass** der zweite Steckverbinder (13) in fluidischer, elektrischer oder optischer Verbindung mit einem zweiten Verbindungsglied (14) steht oder eine Ruhebasis (4) ist.

15. Steckverbindungssystem nach einem der Ansprüche 11 bis 14,
**dadurch gekennzeichnet, dass** der erste Steckverbinder (11) und der zweite Steckverbinder (13) in einem verbundenen Modus (MODC) verbunden sind, und dass in einem getrennten Modus (MODNC) der erste Verbinder (11) in die erste Kappe (30) eingesteckt ist und der zweite Verbinder (13) in die zweite Kappe (40) eingesteckt ist.

16. Verbindungssystem nach einem der Ansprüche 11 bis 15,
**dadurch gekennzeichnet, dass** der erste Verbinder (11) und der zweite Verbinder (13) ein Verriegelungssystem (15) aufweisen.

17. Verkehrsmittel (1),
**dadurch gekennzeichnet, dass** das Verkehrsmittel (1) eine Schutzvorrichtung (20) gemäß einem der Ansprüche 1 bis 10 aufweist.

## Claims

1. . Protective assembly (20) provided with a first hollow cover (30) provided with a first cavity (31), configured to house a first connector (11), said protective assembly (20) being provided with a second cover (40), the second cover (40) comprising a hollow portion (42), delimiting a second cavity (41), configured to house a second connector (13) to connect to the first connector (11), **characterised in that** said first cavity (31) is shaped to an outer envelope (420) of said hollow portion (42), said second cover (40) penetrating, in a connected mode (MODC) and sealingly, into a first cavity (31) by isolating the first cavity (31) and the second cavity (41) from an outer environment (EXT).

2. . Protective assembly according to claim 1,
**characterised in that**, in the connected mode (MODC), the second cover (40) is nested in the first cover (30) head to foot.

3. . Protective assembly according to any one of claims 1 to 2,
**characterised in that** said first cover (30) comprises a hollow part (32) having a first open, proximal end (33) and a first distal end (34) blocked by a first bottom (35), the hollow portion (42) having a second open, proximal end (43) and a second distal end (44) blocked by a second bottom (45), said hollow portion (42) being inserted in the hollow part (32) by its second proximal end (43) in the connected mode (MODC).

4. . Protective assembly according to any one of claims 1 to 3,
**characterised in that** said first cover (30) is secured to a first fastener (37), configured to be attached to the first connector (11) or to a first link (12) secured to the first connector (11), the second cover (40) being secured to a second fastener (47), configured to be attached to the second connector (13) or to a second link (14) secured to the second connector (13).

5. . Protective assembly according to any one of claims 1 to 4,
**characterised in that** said first cover (30) and said second cover (40) have a shape memory material.

6. . Protective assembly according to any one of claims 1 to 5,
**characterised in that** said second cover (40) has a positioning mark (48).

7. . Protective assembly according to claim 6,
**characterised in that** said positioning mark (48) is concealed in the first cavity (31) in the connected mode (MODC).

8. . Protective assembly according to any one of claims 6 to 7,
**characterised in that** said positioning mark (48) has a coloured sign.

9. . Protective assembly according to any one of claims 6 to 8,
**characterised in that** said positioning mark (48) is located outside of the second cavity.

10. . Protective assembly according to any one of claims 1 to 9,
**characterised in that** the first cover (30) has a first shape (36) facing the first cavity (31) and said hollow portion (42) has a second shape (46) outside of the second cavity (41), the second shape (46) being shaped to the first shape (36) to maintain the second cover (40) in the first cover (30) in the connected mode (MODC).

11. . Connection system (10) provided with a first connector (11) and a second connector (13), **characterised in that** said connection system (10) has a protective assembly (20) according to any one of claims 1 to 10.

12. . Connection system according to claim 11,
**characterised in that** said first cover (30) is attached to the first connector (11) or to a first link (12) secured to the first connector (11), said second cover (40) being attached to the second connector (13) or to a second link (14) secured to the second connector (13).

13. . Connection system according to any one of claims 11 to 12,
**characterised in that** said first connector (11) is in fluid, or electric or optical connection with a first link (12).

14. . Connection system according to any one of claims 11 to 13,
**characterised in that** said second connector (13) is in fluid, or electric or optical connection with a second link (14) or is a rest base (4).

15. . Connection system according to any one of claims 11 to 14,
**characterised in that** said first connector (11) and the second connector (13) are connected in a connected mode (MODC), said first connector (11) being press-fitted in the first cover (30) and said second connector (13) being press-fitted in the second cover (40) in a disconnected mode (MODNC).

16. . Connection system according to any one of claims 11 to 15,
**characterised in that** said first connector (11) and the second connector (13) have a locking system (15).

17. . Vehicle (1),
**characterised in that** the vehicle (1) has a protective assembly (20) according to any one of claims 1 to 10.
